# EUROPEAN PATENT SPECIFICATION

(11) **EP 4 367 823 B1**
(45) Date of publication and mention of the grant of the patent: **04.06.2025**
(21) Application number: 21749941.7
(22) Date of filing: 09.07.2021
(51) Int. Cl.: H04L 5/00, G01S 5/02

(54) **SIDELINK POSITIONING WITH ON-DEMAND RECONFIGURATION OF SIDELINK POSITIONING REFERENCE SIGNAL**
SIDELINK-POSITIONIERUNG MIT NEUKONFIGURATION EINES SIDELINK-POSITIONIERUNGSREFERENZSIGNALS AUF ANFRAGE
POSITIONNEMENT EN LIAISON LATÉRALE AVEC RECONFIGURATION À LA DEMANDE D'UN SIGNAL DE RÉFÉRENCE DE POSITIONNEMENT EN LIAISON LATÉRALE

(43) Date of publication of application: 15.05.2024
(73) Proprietor: Nokia Technologies Oy, 02610 Espoo (FI)
(72) Inventor: SAHIN, Taylan, 81539 Munich (DE); KUO, Ping-Heng, London (GB); MICHALOPOULOS, Diomidis, 81541 Munich (DE)
(74) Representative: Laine IP Oy
(86) International application number: PCT/US2021/041108
(87) International publication number: WO 2023/282914

(56) References cited:
- WO-A1-2021/030583
- WO-A1-2021/133104
- QUALCOMM INCORPORATED: "Input to scenarios and requirements for in-coverage, partial-coverage, and out-of-coverage NR positioning use cases", vol. TSG RAN, no. Electronic Meeting; 20210614 - 20210618, 7 June 2021 (2021-06-07), XP052025397, Retrieved from the Internet <URL:https://ftp.3gpp.org/tsg_ran/TSG_RAN/TSGR_92e/Docs/RP-211325.zip RP-211325 Sidelink positioning deployment and operation scenarios.docx> [retrieved on 20210607]
- CEWIT INDIA: "Views on study of sidelink based positioning in Rel. 18", no. 20210628 - 20210702, 7 June 2021 (2021-06-07), XP052026042, Retrieved from the Internet <URL:https://ftp.3gpp.org/tsg_ran/TSG_RAN/TSGR_AHs/2021_06_RAN_Rel18_WS/Docs/RWS-210491.zip RWS-210491_Views on study of sidelink based positioning in Rel. 18.pdf> [retrieved on 20210607]

## Description

### FIELD:

Some example embodiments may generally relate to mobile or wireless telecommunication systems, such as Long Term Evolution, LTE, or fifth generation, 5G, radio access technology or new radio, NR, access technology, or other communications systems. For example, certain embodiments may relate to apparatuses, systems, and/or methods for sidelink positioning with on-demand reconfiguration of sidelink positioning reference signal.

### BACKGROUND:

Examples of mobile or wireless telecommunication systems may include the Universal Mobile Telecommunications System (UMTS) Terrestrial Radio Access Network, UTRAN, Long Term Evolution, LTE, Evolved UTRAN, E-UTRAN, LTE-Advanced, LTE-A, MulteFire, LTE-A Pro, and/or fifth generation, 5G, radio access technology or new radio (NR) access technology. 5G wireless systems refer to the next generation, NG, of radio systems and network architecture. 5G is mostly built on a new radio, NR, but the 5G (or NG) network can also build on E-UTRAN radio. It is estimated that NR will provide bitrates on the order of 10-20 Gbit/s or higher, and will support at least enhanced mobile broadband, eMBB, and ultrareliable low-latency-communication, URLLC, as well as massive machine type communication, mMTC. NR is expected to deliver extreme broadband and ultra-robust, low latency connectivity and massive networking to support the Internet of Things, IoT. With IoT and machine-to-machine, M2M, communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) are named gNB when built on NR radio and named NG-eNB when built on E-UTRAN radio.

The prior art document WO 2021/030583 A1 discloses sidelink positioning techniques, wherein re-configuration of the rate of measurement and reporting to a positioning server is used.

The prior art document WO 2021/133104 A1 discloses discloses sidelink positioning techniques, wherein on-demand sidelink positioning and its pre-configuration are discussed.

### SUMMARY:

Aspects of the present invention are provided in the independent claims and further detailed in the dependent claims.

The scope of the present invention is defined by the scope of the appended claims.

### BRIEF DESCRIPTION OF THE DRAWINGS:

For proper understanding of example embodiments, reference should be made to the accompanying drawings, wherein:
FIG. 1 illustrates an example flow diagram of SL PRS reconfiguration, according to certain example embodiments.
FIG. 2 illustrates a flow diagram of a method, according to certain example embodiments.
FIG. 3 illustrates a flow diagram of another method, according to certain example embodiments.
FIG. 4(a) illustrates an apparatus, according to certain example embodiments.
FIG. 4(b) illustrates another apparatus, according to certain example embodiments.

### DETAILED DESCRIPTION:

It will be readily understood that the components of certain example embodiments, as generally described and illustrated in the figures herein, may be arranged and designed in a wide variety of different configurations. The following is a detailed description of some example embodiments of systems, methods, apparatuses, and computer program products for sidelink positioning with on-demand reconfiguration of sidelink positioning reference signal. The present invention is defined by the scope of the appended claims.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily all refer to the same group of embodiments, and the described features, structures, or characteristics may be combined in any suitable manner in one or more example embodiments. Further, the phrase "based on" may indicate a condition and/or situation. For example, "based on" may mean "if", and "based on" may be interchangeable with the conditional word "if".

Additionally, if desired, the different functions or steps discussed below may be performed in a different order and/or concurrently with each other. Furthermore, if desired, one or more of the described functions or steps may be optional or may be combined. As such, the following description should be considered as merely illustrative of the principles and teachings of certain example embodiments, and not in limitation thereof.

Certain example embodiments may relate to the positioning of user equipment (UE) with the use of a sidelink (SL) interface. SL is the direct link between UEs, as opposed to uplink (UL) and downlink (DL) between the UE and the base station (e.g., gNB). SL supports direct communication between the UEs under the name device-to-device (D2D) communications. A use case for D2D may include proximity services that target public safety. SL may also become part of LTE and 5G new radio (NR) vehicle-to-everything (V2X) communications by supporting vehicle-to-vehicle (V2V) communications. Additionally, SL may provide support for direct communication between Internet of Things (IoT) devices in the future.

Positioning using SL has been discussed in the introduction of D2D communications. More recently, it is expected to be studied in 3^{rd} Generation Partnership Project (3GPP) Release 18 for vehicular and public safety use cases in scenarios and requirements of in-coverage, partial coverage, and out-of-coverage positioning. SL may be a key enabler for a variety of verticals including, for example, smart transportation and smart city, industry 4.0, consumer, smart home, and smart retail, enabling UEs to locate themselves under in-, outside, and partial coverage conditions.

To position a specific UE using SL, other UEs may transmit signals for positioning, as in the case of DL and UL used for positioning. As described herein, the UE to be positioned may be referred to as the "target UE" (T-UE), the positioning signal to be transmitted in SL may be referred to as the "SL positioning reference signal" (SL PRS), and the other UEs transmitting this signal may be referred to as the "anchor UEs" (A-UEs). SL PRS transmissions may be configured in terms of various parameters including, for example, time-frequency resources. The time-frequency resources may include various examples such as bandwidth, duration of the positioning session, periodicity, number of symbols, repetition pattern, combining structure, slot bitmap, power, beam pattern, etc., which may all be generally referred to as "SL PRS configuration".

Compared to positioning via DL and/or UL, SL may have a distributed and more dynamic structure, with highly varying conditions in terms of mobility and radio channel conditions. Depending on these conditions, the SL PRS configuration might not satisfy the quality of service (QoS) requirements for positioning, such as positioning accuracy, latency, and integrity. On the other hand, without network coordination, SL PRS of different anchor UEs might interfere at the T-UE (e.g., due to the hidden-node problem that can arise in outside and partial coverage scenarios). Further, any useless or redundant SL PRS transmissions may consume extra UE power, and further create interference on other SL transmissions. Thus, dynamical coordination of SL PRS transmission for SL positioning may lead to a desire to achieve/provide efficient methods in order to meet QoS requirements and improve network efficiency. Nevertheless, such coordination may need information relating to prevailing status of the involved air interface at both anchor and target UE sides, and these may not be visible to the location management function (LMF). Accordingly, certain example embodiments may provide solutions on situations where the A-UE determines whether a reconfiguration of PRS is needed or is beneficial, and address the problem of how the A-UE may assist the LMF to better coordinate SL PRS transmission in the network to achieve better positioning accuracy and system/device efficiency.

Although prior solutions discuss the selection (and activation) of A-UEs for SL positioning, the selection of anchors are proposed to be determined by, for example, the T-UE, based on conditions such as received power in SL, service priority, and other parameters. However, prior solutions lack the idea of what to do in case an SL PRS configuration becomes insufficient (i.e., not matching the positioning QoS requirements) due to dynamically changing SL conditions in terms of radio channel, mobility, environment, and QoS requirements.

As discussed herein, certain example embodiments may provide dynamic reconfiguration of SL PRS (including its suspension and/or deactivation, or switching to UL/DL-based positioning), based on varying SL conditions and/or the status of A-UEs, in order to satisfy the QoS requirements for positioning a T-UE. In certain example embodiments, the reconfiguration may be initiated on demand by the UE transmitting the SL PRS, such as, for example, the anchor UE.

In some example embodiments, the A-UE may determine a "suitability" of the SL PRS configuration that it is using for positioning of a specific T-UE, and initiate a reconfiguration or suspension/de-activation of the SL PRS it transmits. The suitability may be referred to as the SL conditions that impact the positioning performance including accuracy, latency and integrity, such as line-of-sight (LoS) condition between the A-UE and the T-UE, their relative speeds, etc., as well as other factors enabling positioning, such as energy availability of the UEs (e.g., A-UE and T-UE) to transmit or receive SL PRS. The A-UE may also take the information provided by the T-UE including, for example, measurements of signals into account when determining the position suitability.

According to certain example embodiments, when the UEs are inside coverage, the A-UE may request or recommend a new SL PRS configuration to transmit from the network. In this case, the A-UE may provide additional information on SL conditions it observes, and/or it may provide the information from the T-UE to help determine the new SL PRS configuration. For example, the A-UE may provide to the network the information relating to "reasoning" of why such new SL PRS configuration is needed/beneficial. According to certain example embodiments, possible reasons may include characteristics relating to radio propagation channel between the A-UE and a T-UE such as the absence/presence of LoS between the A-UE and a T-UE, battery status of the A-UE, and/or a mobility level of the A-UE.

In certain example embodiments, with the information relating to the above-listed reasons from one or more A-UEs, the network (e.g., LMF) may be able to make a more proper decision in terms of coordination among multiple A-UEs. For instance, if an A-UE requests to mute at least one of its SL PRS configurations because the T-UE is not in a favorable propagation environment (e.g., no LoS path with respect to the anchor UE), the LMF may decide to re-allocate this A-UE to assist positioning of another T-UE, where LoS path may be present. On the other hand, if the A-UE made such request simply because its battery is running low or if it is overloaded with some other tasks, the LMF may directly remove this anchor UE from the list of candidates that can assist in SL positioning as it is not suitable to assist any other T-UE either.

In other example embodiments, the A-UE may indicate, along with the reasoning(s), whether such SL PRS reconfiguration request is applicable globally or specific to a particular T-UE. This information may enable the LMF to determine how to respond to such a request. For example, if this is only applicable to a specific T-UE, the LMF may decide not to change this SL PRS configuration, but instead request the T-UE to cease measuring the SL PRS from this A-UE. In other example embodiments, if an indication for non-line-of-sight (NLOS) by the A-UE pertains to a certain T-UE, the LMF may apply additional mechanisms to verify that such NLOS is temporal, such that the SL PRS resources may be reverted to their previous values after the temporal NLOS conditions are recovered. Additionally, the A-UE may request/recommend using another A-UE, or using UL/DL-based methods for positioning the T-UE.

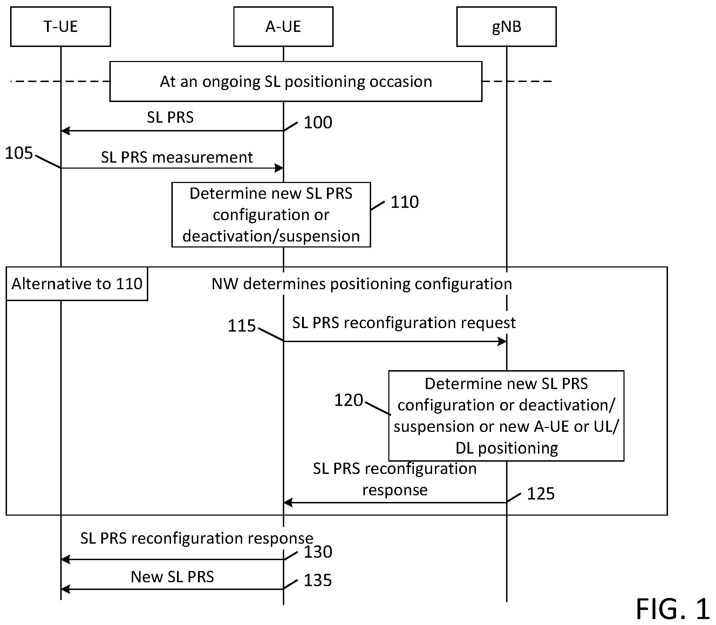

FIG. 1 illustrates an example flow diagram of SL PRS reconfiguration, according to certain example embodiments. In particular, at 100, during an ongoing positioning session, where the A-UE is transmitting SL PRS to the T-UE based on the SL conditions that A-UE observes or its own status, or the information provided by the T-UE, the A-UE may initiate reconfiguration of SL PRS. At 105, the T-UE may respond to the SL PRS transmitted by the A-UE by transmitting an SL PRS measurement to the A-UE. In certain example embodiments, the SL PRS measurements may include time-, angle-, phase-, and power-based measurements. For instance, the T-UE may measure a time of arrival, a time difference of arrival, an angle of arrival, an angle of departure, and/or received power of the SL PRS. At 110, according to certain example embodiments, the reconfiguration of SL PRS may include its suspension/deactivation, change of positioning method, or change of A-UE. In the event that the A-UE is under network coverage, the A-UE may also send, for example, at 115, a SL PRS reconfiguration request message to the network (e.g., gNB), where it leaves the determination of a new configuration for positioning to the network. At 120, the network may determine the new SL PRS configuration, deactivation/suspension, a new A-UE, or UL/DL positioning. At 125, the network may transmit a SL PRS reconfiguration response to the A-UE, which may include the determination made by the network at 115. At 130, after determination of the configuration, the A-UE may inform the T-UE about it, and apply the new configuration, at 135 (e.g., starts transmitting new SL PRS).

According to certain example embodiments, as previously noted, the A-UE may determine positioning "suitability". That is, the A-UE may decide on the reconfiguration of SL PRS resources based on a set of actions and/or measurements including, for example, A-UE suitability, and coupling SL resources with other T-UEs in the area. With regard to A-UE suitability, the A-UE suitability may reflect the A-UE's ability to serve as A-UE, and yield a sufficient support to the T-UE.

For instance, in certain example embodiments, the A-UE may continuously monitor its own positioning performance (such as accuracy, integrity or confidence level of its position accuracy), such that in case the positioning performance degrades below a given threshold (as configured by the network) the A-UE may declare non-suitability, and suspend or reconfigure SL PRS transmissions. The network may then be notified about this change or suspension accordingly.

In other example embodiments, with A-UE suitability, the A-UE may monitor the Doppler spread with respect to the T-UE, and trigger reconfiguration of the PRS resources (e.g., increase of SL PRS bandwidth) in case the maximum Doppler spread exceeds a specified value which may be (pre-) configured by the network. However, according to other example embodiments, the A-UE may refrain from or suspend transmission of the SL PRS for as long as the maximum Doppler spread is out of a bounded interval.

In other example embodiments with regard to A-UE suitability, the A-UE may decide based on its own availability, to provide energy resources for the purpose of the A-UE (i.e., the A-UE may decide based on its own energy supply in conjunction with an estimated SL PRS resource usage). In some example embodiments, the estimated SL PRS resource usage may be obtained by means of estimating the SL PRS Tx power based on the positioning requirements, the energy available of the A-UE, and the potential process requiring energy consumption (i.e., other processes on the A-UE besides positioning). In other example embodiments, when there is an indication or a prediction that during the requested time for SL PRS transmission other local processes at the A-UE would be deprived of sufficient power, the A-UE may decide to suspend and/or reconfigure the SL PRS resources in a best effort manner (i.e., if there is power available).

According to certain example embodiments, the A-UE may couple SL resources with other T-UEs in an area. For instance, the A-UE may keep track of the SL PRS transmissions, and the potential receipts (i.e., T-UEs) of the SL PRS. For efficiency purposes, the A-UE may couple SL PRS transmissions of nearby T-UEs when the A-UE detects that the same SL PRS resource may be detected by all interested T-UEs. Additionally, when there is an active SL PRS transmission with given resources targeting a target UE T-UE_A, and a new request arrives by network or another T-UE_B for SL PRS targeting the new T-UE_B, the A-UE may adjust both SL PRS resources so as to serve both T-UEs with minimum SL PRS resource cost. In this case, the A-UE may trigger reconfiguration of SL PRS resources for T-UE_A (e.g., adjusted periodicity and/or bandwidth), in order to accommodate both T-UE_A and T-UE_B with the same SL PRS.

As illustrated in FIG. 1, the present invention suggests providing an on-demand SL PRS reconfiguration request message. For example, the SL PRS reconfiguration request message sent from the A-UE to the network may include one or more of a request/recommendation for a new SL PRS configuration, a request/recommendation for a different positioning method, and/or a request/recommendation for a different A-UE. According to certain example embodiments, the request/recommendation for a new SL PRS configuration may be made without specifying its parameters, thus leaving the decision to the network. alternatively, the request/recommendation for a new SL PRS configuration may be made with all parameters specified. For instance, a new SL PRS configuration with M beams, X MHz bandwidth, Y ms periodicity, comb structure Z, etc.

In other example embodiments, the request/recommendation for a new SL PRS configuration may be made by specifying the difference in parameters as compared to current SL PRS configuration(s). For example, the difference in parameters may relate to turning on beam #2 (i.e., particular beam with its identifier), increment bandwidth by 10 MHz, decrement periodicity by 50 ms, or change the slot comb structure to 3 slots. In further example embodiments, the request/recommendation for a new SL PRS configuration may be made from a pre-configured list known to UEs and the network. This may include, for example, SL PRS configuration #3 in the list, which may include 10 different SL PRS configurations with different IDs. In certain example embodiments, the pre-configuration may include a set of SL PRS configurations, each associated with an ID. Thus, the UE may indicate which exact SL PRS configuration is to be selected by indicating its ID. In this example, there may be 10 pre-configured SL PRS configurations, with IDs such as ID #1, #2, ..., #10, and the UE may indicate #3 among these IDs.

According certain example embodiments, when the request/recommendation is for a different positioning method, the A-UE may use DL or UL positioning methods rather than an SL positioning method. Additionally, in other example embodiments, when the request/recommendation is for a different anchor UE, the A-UE may replace the anchor UE ID#X (e.g., itself) by UE ID#Y to assist in the positioning of the T-UE.

In certain example embodiments, the request by the A-UE may indicate whether the SL PRS reconfiguration request is valid for a specific T-UE, for a subset of such UEs, or globally for any T-UE. For this, the A-UE may indicate corresponding IDs of the T-UE(s), or another ID for the global case when sending the request. According to certain example embodiments, the validity of the SL PRS reconfiguration request may relate to whether the specified SL PRS configuration will be utilized for/by a specific T-UE (with an ID), a subset of T-UEs (with their IDs), or any T-UE (e.g., via indicating another ID corresponding to this case).

In some example embodiments, the SL PRS reconfiguration request may include information on the status of the A-UE or SL conditions that the T-UE or A-UE observes as a "reasoning" for such reconfiguration request. This may be used to help the network determine the new SL PRS configuration, to predict the potential duration of the new configuration (e.g., for quickly reverting back to the old configuration), and to instigate a new positioning method or new A-UE.

According to certain example embodiments, details of the information included in the SL PRS reconfiguration request message may include SL channel measurements based on received SL signals from other UEs such as reference signal received power (RSRP), received signal strength indicator (RSSI), channel state information (CSI), signal-to-noise and interference ratio (SINR), and Doppler spread. Such messages may be T-UE specific. The information may also include accuracy of its own location and measurements (e.g., coarse range/position and error margins). Additionally, the information may include SL LoS condition to target/anchor UE based on channel measurements and observations such as those acquired via a camera, lidar, etc. In certain example embodiments, the information may also include an energy status/level of the A-UE, scheduling/traffic status of the A-UE (e.g., whether it is loaded with other transmissions over SL), and processing status of the A-UE (e.g., it may have other tasks for processing with higher priority). In some example embodiments, the SL PRS reconfiguration request message may include one or a combination of any of the example detail information contents listed above.

With reference to FIG. 1, the on-demand SL PRS reconfiguration response message is sent from the network at 130. In particular, based on the received request and information, the network is configured to determine the new SL PRS configuration, a new positioning method, or a new A-UE. Alternatively, the network may decide to suspend or de-activate the SL PRS transmission without providing a new configuration. This suspension may also be associated with a calculated time duration, which may be calculated based on the information provided by the A-UE. The T-UE may then be informed about the decision via a SL PRS reconfiguration response message that may be sent from the anchor UE or the network (see operation 130 in FIG. 1). According to certain example embodiments, this message may include one or more of a new SL PRS configuration, no new SL PRS configuration, a new UL/DL positioning method to be applied, or a new A-UE(s) to be utilized for positioning the target UE, including its new SL PRS configuration as noted above.

In certain example embodiments, when the SL PRS reconfiguration response message includes a new SL PRS configuration, the new SL PRS configuration may be included with all parameters specified such as, for example, a new SL PRS configuration with X MHz bandwidth, Y ms periodicity, comb structure Z, etc. The new SL PRS configuration may also include parameters specified by the difference with respect to current SL PRS configuration such as, for example, a new SL PRS configuration with bandwidth incremented by 100 MHz, or a new SL PRS configuration with a periodicity set to 10 ms. In other example embodiments, the new SL PRS configuration may be included from a pre-configured list known to UEs and the network. For example, the pre-configured list may be SL PRS configuration #3 in the list, which may include 10 different SL PRS configurations with different IDs.

According to certain example embodiments, the SL PRS reconfiguration response message may include no new SL PRS configuration. In certain example embodiments, when there is no new SL PRS configuration, the SL PRS reconfiguration response message may be transmitted with the current SL PRS configuration being continued, deactivated, or suspended for a certain duration or location, and indicated by a threshold timer or distance.

According to other example embodiments, the SL PRS reconfiguration response message may include a new UL/DL positioning method to be applied. This method may be applied with the current SL positioning being continued, reconfigured, suspended, or deactivated. In further example embodiments, the SL PRS reconfiguration response message may include a new A-UE(s) to be utilized for positioning the T-UE, including its new SL PRS configuration. In this case, the new A-UE(s) may be utilized with the current A-UE(s) being either continued, reconfigured, suspended, or deactivated for transmitting SL PRS.

In certain example embodiments, the signaling of the SL PRS reconfiguration request (for SL PRS reconfiguration, positioning method change, or A-UE change) and response messages over SL may be performed via radio resource control (RRC) or lower layer signaling. Additionally, the messages between the UE and the network for configuration of SL PRS may be performed via LTE positioning protocol (LPP) and NR positioning protocol A (NRPPa) protocols. The NRPPa protocols may involve a positioning server (e.g., LMF in NR) that controls the SL and UL/DL PRS transmissions, or lower layer signaling such as RRC, for which new messages need to be defined. The messages may also be further relayed via UEs or other network entities including, for example, T-UE's SL PRS request message may be relayed via other UEs to the gNB when the T-UE is outside the coverage area.

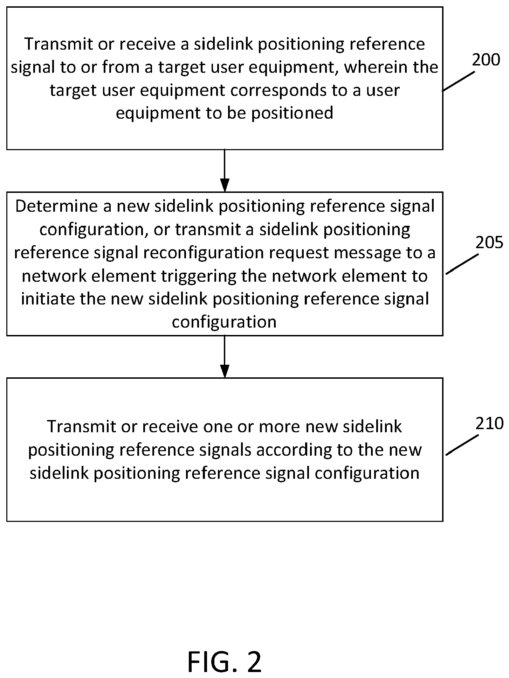

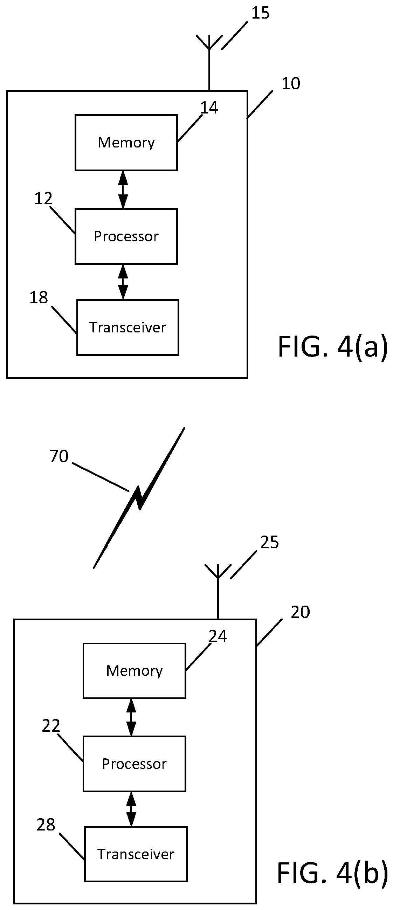

FIG. 2 illustrates a flow diagram of a method, according to certain example embodiments. In some example embodiments, the flow diagram of FIG. 2 may be performed by a telecommunications network entity or network node in a 3GPP system, such as LTE or 5G-NR. For instance, in certain example embodiments, the method of FIG. 2 may be performed by a UE, for instance similar to apparatuses 10 or 20 illustrated in FIGs. 4(a) or 4(b).

According to the present invention, the method of FIG. 2 is provided. The method includes at 200, transmitting or receiving a sidelink positioning reference signal to or from a target user equipment, wherein the target user equipment corresponds to a user equipment to be positioned. At 205, the method includes determining a new sidelink positioning reference signal configuration, or transmitting a sidelink positioning reference signal reconfiguration request message to a network element triggering the network element to initiate the new sidelink positioning reference signal configuration. Further, at 210, the method includes transmitting or receiving one or more new sidelink positioning reference signals according to the new sidelink positioning reference signal configuration.

According to certain example embodiments, the method further includes receiving a measurement report from the target user equipment. In certain example embodiments, the measurement report may include status information of the target user equipment. The status information may include at least one of a sidelink measurement of the target user equipment, a current status of positioning performance of the target user equipment, a loading status of the target user equipment, a resource status of the target user equipment, a data traffic status of the target user equipment, a battery status of the target user equipment, and mobility characteristics of the target user equipment. According to other example embodiments, the method may also include informing the target user equipment of the new sidelink positioning reference signal configuration. According to some example embodiments, the new sidelink positioning reference signal configuration may include parameters to be reconfigured. In certain example embodiments, the parameters may include time and frequency resources, magnitude, phase and power of the sidelink positioning reference signal, a number of beams, a defined signal bandwidth, a defined duration the sidelink positioning reference signal and signal periodicity, or a defined comb structure.

In some example embodiments, if the sidelink positioning reference signal reconfiguration request message is transmitted to the network element, the method may further include receiving a sidelink positioning reference signal reconfiguration response message from the network element. In other example embodiments, the sidelink positioning reference signal reconfiguration response message may include at least one of an instruction to maintain a current sidelink positioning reference signal configuration, an instruction to activate or deactivate at least one sidelink positioning reference signal configuration, a subset of sidelink positioning reference signal parameters to be modified, the new sidelink positioning reference signal configuration, a new uplink or downlink positioning method to be applied, and a new set of anchor user equipment to be utilized for positioning the target user equipment.

According to certain example embodiments, the sidelink positioning reference signal reconfiguration request message may include at least one of at least one reason why the sidelink positioning reference signal reconfiguration request message is made, a request for the new sidelink positioning reference signal configuration, a request for a different positioning method, a request for a different anchor user equipment, and status information of an anchor user equipment, or sidelink conditions that are observed by the target user equipment or the anchor user equipment. According to some example embodiments, the at least one reason may include the status information of the target user equipment, a characteristic of a radio propagation channel between the anchor user equipment and the target user equipment, a current status of positioning performance of the target user equipment, a loading status of the anchor user equipment, a resource status of the anchor user equipment, a data traffic status of the anchor user equipment, a battery status of the anchor user equipment, a mobility level of the anchor user equipment. According to other example embodiments, the sidelink positioning reference signal reconfiguration request message may include a validity indication on whether the sidelink positioning reference signal reconfiguration request message is applicable for the target user equipment, for a subset of target user equipment, or for a plurality of global target user equipment.

In certain example embodiments, the method may also include determining reconfiguration of sidelink positioning reference signal resources based on an anchor user equipment suitability, or coupling of sidelink resources with one or more other target user equipment. In some example embodiments, coupling of sidelink resources with the one or more other target user equipment may include adjusting sidelink positioning reference signal resources for the target user equipment and the one or more other target user equipment. In other example embodiments, the anchor user equipment suitability may be defined by one or more elements affecting positioning accuracy comprising a line-of-sight condition between the anchor user equipment and the target user equipment, mobility conditions of the anchor user equipment, energy availability of the anchor user equipment, a confidence level of position of the anchor user equipment, or scheduling and traffic patterns at the anchor user equipment.

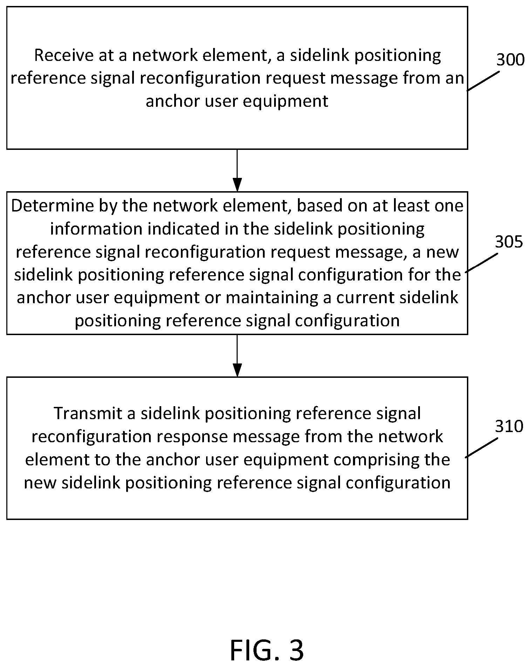

FIG. 3 illustrates a flow diagram of another method, according to certain example embodiments. In an example embodiment, the method of FIG. 3 may be performed by a telecommunications network entity or network node in a 3GPP system, such as LTE or 5G-NR. For instance, in certain example embodiments, the method of FIG. 3 may be performed by a gNB, for instance similar to apparatuses 10 or 20 illustrated in FIGs. 4(a) or 4(b).

According to the present invention, the method of FIG. 3 is provided. The method includes, at 300, receiving at a network element, a sidelink positioning reference signal reconfiguration request message from an anchor user equipment. At 305, the method includes determining by the network element, based on at least one information indicated in the sidelink positioning reference signal reconfiguration request message, a new sidelink positioning reference signal configuration for the anchor user equipment or maintaining a current sidelink positioning reference signal configuration. Further, at 310, the method includes transmitting a sidelink positioning reference signal reconfiguration response message from the network element to the anchor user equipment comprising the new sidelink positioning reference signal configuration.

According to certain example embodiments, the new sidelink positioning reference signal configuration may include at least one of deactivation or suspension of a current sidelink positioning reference signal configuration, a new uplink or downlink positioning method to be applied, and a new anchor user equipment to be utilized for positioning a target user equipment. According to some example embodiments, the sidelink positioning reference signal reconfiguration request message may include at least one of at least one reason why the sidelink positioning reference signal reconfiguration request message is made, a request for the new sidelink positioning reference signal configuration, a request for a different positioning method, a request for a different anchor user equipment, and status information of the anchor user equipment, or sidelink conditions that are observed by a target user equipment or the anchor user equipment. According to other example embodiments, the at least one reason may include a characteristic of a radio propagation channel between the anchor user equipment and the target user equipment, a sidelink measurement of the target user equipment, a current status of positioning performance of the target user equipment, a loading status of the anchor user equipment or the target user equipment, a resource status of the anchor user equipment or the target user equipment, a data traffic status of the anchor user equipment or the target user equipment, a battery status of the anchor user equipment or the target user equipment, or a mobility level of the anchor user equipment or the target user equipment.

In certain example embodiments, the sidelink positioning reference signal reconfiguration response message may include at least one of an instruction to maintain a current sidelink positioning reference signal configuration, an instruction to activate or deactivate at least one sidelink positioning reference signal configuration, a subset of sidelink positioning reference signal parameters to be modified, the new sidelink positioning reference signal configuration, a new uplink or downlink positioning method to be applied, and a new set of anchor user equipment to be utilized for positioning a target user equipment. In some example embodiments, the method may also include, based on the sidelink positioning reference signal request message, re-allocating by the network element, the anchor user equipment to assist positioning of another different target user equipment, or removing the anchor user equipment from a list of candidates that can assist in sidelink positioning. In other example embodiments, the sidelink positioning reference signal reconfiguration request message may include at least one of a validity indication on whether the sidelink positioning reference signal reconfiguration request message is applicable for a target user equipment, for a subset of target user equipment, or for a plurality of global target user equipment, and status information of an anchor user equipment, or sidelink conditions that are observed by the target user equipment or the anchor user equipment.

FIG. 4(a) illustrates an apparatus 10 according to certain example embodiments. In an embodiment, apparatus 10 may be a network element in a communications network or associated with such a network, such as a UE, or other similar device. It should be noted that one of ordinary skill in the art would understand that apparatus 10 may include components or features not shown in FIG. 4(a).

In some example embodiments, apparatus 10 may include one or more processors, one or more computer-readable storage medium (for example, memory, storage, or the like), one or more radio access components (for example, a modem, a transceiver, or the like), and/or a user interface. In some embodiments, apparatus 10 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 10 may include components or features not shown in FIG. 4(a).

As illustrated in the example of FIG. 4(a), apparatus 10 may include or be coupled to a processor 12 for processing information and executing instructions or operations. Processor 12 may be any type of general or specific purpose processor. In fact, processor 12 may include one or more of generalpurpose computers, special purpose computers, microprocessors, digital signal processors, DSPs, field-programmable gate arrays, FPGAs, application-specific integrated circuits, ASICs, and processors based on a multi-core processor architecture, as examples. While a single processor 12 is shown in FIG. 4(a), multiple processors may be utilized according to other embodiments. For example, it should be understood that, in certain example embodiments, apparatus 10 may include two or more processors that may form a multiprocessor system, for example in this case processor 12 may represent a multiprocessor, that may support multiprocessing. According to certain example embodiments, the multiprocessor system may be tightly coupled or loosely coupled, for example to form a computer cluster.

Processor 12 may perform functions associated with the operation of apparatus 10 including, as some examples, precoding of antenna gain/phase parameters, encoding and decoding of individual bits forming a communication message, formatting of information, and overall control of the apparatus 10, including processes illustrated in FIGs. 1 and 2.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory, RAM, read only memory, ROM, static storage such as a magnetic or optical disk, hard disk drive, HDD, or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10 to perform any of the methods illustrated in FIGs. 1 and 2.

In some embodiments, apparatus 10 may also include or be coupled to one or more antennas 15 for receiving a downlink signal and for transmitting via an uplink from apparatus 10. Apparatus 10 may further include a transceiver 18 configured to transmit and receive information. The transceiver 18 may also include a radio interface, for example, a modem, coupled to the antenna 15. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform, IFFT, module, and the like, to process symbols, such as OFDMA symbols, carried by a downlink or an uplink.

For instance, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device). In certain embodiments, apparatus 10 may further include a user interface, such as a graphical user interface or touchscreen.

In an embodiment, memory 14 stores software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software. According to an example embodiment, apparatus 10 may optionally be configured to communicate with apparatus 20 via a wireless or wired communications link 70 according to any radio access technology, such as NR.

According to certain example embodiments, processor 12 and memory 14 may be included in or may form a part of processing circuitry or control circuitry. In addition, in some embodiments, transceiver 18 may be included in or may form a part of transceiving circuitry.

As discussed above, according to certain example embodiments, apparatus 10 may be a UE for example. According to certain embodiments, apparatus 10 may be controlled by memory 14 and processor 12 to perform the functions associated with example embodiments described herein. For instance, in one embodiment, apparatus 10 may be controlled by memory 14 and processor 12 to transmit or receive a sidelink positioning reference signal to or from a target user equipment, wherein the target user equipment corresponds to a user equipment to be positioned. Apparatus 10 may also be controlled by memory 14 and processor 12 to determine a new sidelink positioning reference signal configuration, or transmit a sidelink positioning reference signal reconfiguration request message to a network element triggering the network element to initiate the new sidelink positioning reference signal configuration. Apparatus 10 may further be controlled by memory 14 and processor 12 to transmit or receive one or more new sidelink positioning reference signals according to the new sidelink positioning reference signal configuration.

FIG. 4(b) illustrates an apparatus 20 according to certain example embodiments. In an example embodiment, the apparatus 20 may be a network element in a communications network or associated with such a network, such as a gNB, or other similar device. It should be noted that one of ordinary skill in the art would understand that apparatus 20 may include components or features not shown in FIG. 4(b).

As illustrated in the example of FIG. 4(b), apparatus 20 may include a processor 22 for processing information and executing instructions or operations. Processor 22 may be any type of general or specific purpose processor. For example, processor 22 may include one or more of generalpurpose computers, special purpose computers, microprocessors, DSPs, FPGAs, ASICs, and processors based on a multi-core processor architecture, as examples. While a single processor 22 is shown in FIG. 4(b), multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster.

According to certain example embodiments, processor 22 may perform functions associated with the operation of apparatus 20, which may include, for example, precoding of antenna gain/phase parameters, encoding and decoding of individual bits forming a communication message, formatting of information, and overall control of the apparatus 20, including processes illustrated in FIGs. 1 and 3.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of RAM, ROM, static storage such as a magnetic or optical disk, HDD, or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20 to perform the methods illustrated in FIGs. 1 and 3.

In certain example embodiments, apparatus 20 may also include or be coupled to one or more antennas 25 for transmitting and receiving signals and/or data to and from apparatus 20. Apparatus 20 may further include or be coupled to a transceiver 28 configured to transmit and receive information. The transceiver 28 may include, for example, a plurality of radio interfaces that may be coupled to the antenna(s) 25. The radio interfaces may correspond to a plurality of radio access technologies including one or more of GSM, NB-IoT, LTE, 5G, WLAN, Bluetooth, BT-LE, NFC, RFID, UWB, MulteFire, and the like. The radio interface may include components, such as filters, converters (for example, digital-to-analog converters and the like), mappers, a FFT module, and the like, to generate symbols for a transmission via one or more downlinks and to receive symbols,for example, via an uplink.

As such, transceiver 28 may be configured to modulate information on to a carrier waveform for transmission by the antenna(s) 25 and demodulate information received via the antenna(s) 25 for further processing by other elements of apparatus 20. In other embodiments, transceiver 18 may be capable of transmitting and receiving signals or data directly. Additionally or alternatively, in some embodiments, apparatus 20 may include an input and/or output device (I/O device).

In an embodiment, memory 24 may store software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

According to some embodiments, processor 22 and memory 24 may be included in or may form a part of processing circuitry or control circuitry. In addition, in some embodiments, transceiver 28 may be included in or may form a part of transceiving circuitry.

As used herein, the term "circuitry" may refer to hardware-only circuitry implementations, for example analog and/or digital circuitry, combinations of hardware circuits and software, combinations of analog and/or digital hardware circuits with software/firmware, any portions of hardware processor(s) with software (including digital signal processors) that work together to cause an apparatus (e.g., apparatus 10 and 20) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 20 may be a be a network element, a node, host, or server in a communication network or serving such a network. For example, apparatus 20 may be a C-SON, SON, or other similar device associated with a RAN, such as an LTE network, 5G or NR. According to certain embodiments, apparatus 20 may be controlled by memory 24 and processor 22 to perform the functions associated with any of the embodiments described herein.

For instance, in one embodiment, apparatus 20 may be controlled by memory 24 and processor 22 to receive a sidelink positioning reference signal reconfiguration request message from an anchor user equipment. Apparatus 20 may also be controlled by memory 24 and processor 22 to determine, based on at least one information indicated in the sidelink positioning reference signal reconfiguration request message, a new sidelink positioning reference signal configuration for the anchor user equipment or maintain a current sidelink positioning reference signal configuration. Apparatus 20 may further be controlled by memory 24 and processor 22 to transmit a sidelink positioning reference signal reconfiguration response message to the anchor user equipment comprising the new sidelink positioning reference signal configuration.

In some example embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of the operations.

Further example embodiments may provide means for performing any of the functions or procedures described herein. For example, certain example embodiments may be directed to an apparatus that includes means for transmitting or receiving a sidelink positioning reference signal to or from a target user equipment, wherein the target user equipment corresponds to a user equipment to be positioned. The apparatus may also include means for determining a new sidelink positioning reference signal configuration, or transmitting a sidelink positioning reference signal reconfiguration request message to a network element triggering the network element to initiate the new sidelink positioning reference signal configuration. In addition, the apparatus may include means for transmitting or receiving one or more new sidelink positioning reference signals according to the new sidelink positioning reference signal configuration.

Other example embodiments may be directed to a further apparatus that includes means for receiving a sidelink positioning reference signal reconfiguration request message from an anchor user equipment. The apparatus may also include means for determining, based on at least one information indicated in the sidelink positioning reference signal reconfiguration request message, a new sidelink positioning reference signal configuration for the anchor user equipment or maintaining a current sidelink positioning reference signal configuration. The apparatus may further include means for transmitting a sidelink positioning reference signal reconfiguration response message to the anchor user equipment comprising the new sidelink positioning reference signal configuration.

Certain example embodiments described herein provide several technical improvements, enhancements, and /or advantages. In some example embodiments, it may be possible to provide improved positioning QoS and resource utilization efficiency on SL by enabling the anchor UE to request on-demand reconfiguration/deactivation of SL PRS with reasons specific to a target UE. Additionally, certain example embodiments may provide the ability to allow the network to properly coordinate positioning. According to other example embodiments, it may be possible to improve SL positioning by enabling on-demand reconfiguration of reference signals used for positioning based on varying SL conditions in order to meet positioning QoS requirements such as latency and accuracy. Certain example embodiments may also provide improvements in UE power/energy saving.

In other example embodiments, it may be possible to enable network efficiency improvements in terms of SL resource utilization by reconfiguration/deactivation/suspension of SL PRS transmissions dynamically based on the changing needs of the network. Additionally, certain example embodiments may realize a practical implementation of SL-assisted positioning since certain example embodiments may provide to the anchor UE, the possibility to request modification of SL PRS resources based on its suitability to serve as an anchor UE. Other example embodiments may provide dynamic optimization of SL PRS resources in accordance to the temporal SL radio conditions (e.g., NLOS or Doppler spread), as well as the energy availability at the anchor UE.

A computer program product may comprise one or more computer-executable components which, when the program is run, are configured to carry out some example embodiments. The one or more computer-executable components may be at least one software code or portions of it. Modifications and configurations required for implementing functionality of an example embodiment may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit, ASIC, a programmable gate array, PGA, a field programmable gate array, FPGA, or any other combination of hardware and software. In yet another example embodiment, the functionality may be implemented as a signal, a non-tangible means that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

One having ordinary skill in the art will readily understand that the invention as discussed above may be practiced with steps in a different order, and/or with hardware elements in configurations which are different than those which are disclosed. The scope of the present invention is defined by the scope of the appended claims.

Although the above embodiments refer to 5G NR and LTE technology, the above embodiments may also apply to any other present or future 3GPP technology, such as LTE-advanced, and/or fourth generation, 4G, technology.

### Partial Glossary:

- 3GPP: 3^{rd} Generation Partnership Project
- 5G: 5^{th} Generation Wireless Technology
- A-UE: Anchor U E
- DL: Downlink
- eNB: Enhanced Node B
- gNB: 5G or NR Base Station
- IIoT: Industrial Internet of Things
- LMF: Location Management Function
- LoS: Line of Sight
- LPP: LTE Positioning Protocol
- LTE: Long Term Evolution
- NR: New Radio
- NRPPa: NR Positioning Protocol A
- NW: Network
- PRS: Positioning Reference Signal
- QoS: Quality of Service
- RRC: Radio Resource Control
- SL: Sidelink
- SNB: Serving gNB
- SIB: System Information Block
- SRS: Sounding Reference Signal
- T-UE: Target UE
- UE: User Equipment
- UL: Uplink
- V2X: Vehicle-to-Everything

## Claims

1. An apparatus (10, 20), comprising:
means for transmitting a sidelink positioning reference signal to a target user equipment, wherein the target user equipment corresponds to a user equipment to be positioned;
means for determining a new sidelink positioning reference signal configuration, or transmitting a sidelink positioning reference signal reconfiguration request message to a network element triggering the network element to initiate determining of a new sidelink positioning reference signal configuration, the new sidelink positioning reference signal configuration being used for reconfiguring transmission of the sidelink positioning reference signal; and
means for transmitting, to the target user equipment, one or more new sidelink positioning reference signals according to the new sidelink positioning reference signal configuration.

2. The apparatus according to claim 1, further comprising:
means for receiving a measurement report from the target user equipment,
wherein the measurement report comprises status information of the target user equipment, the status information comprising at least one of:
a sidelink measurement of the target user equipment,
a current status of positioning performance of the target user equipment,
a loading status of the target user equipment,
a resource status of the target user equipment,
a data traffic status of the target user equipment,
a battery status of the target user equipment, or
mobility characteristics of the target user equipment.

3. The apparatus according to claims 1 or 2, further comprising:
means for informing the target user equipment of the new sidelink positioning reference signal configuration.

4. The apparatus according to any of claims 1-3,
wherein the new sidelink positioning reference signal configuration comprises parameters to be reconfigured, and
wherein the parameters comprise at least one of: time and frequency resources, magnitude, phase and power of the sidelink positioning reference signal, a number of beams, a defined signal bandwidth, a defined duration the sidelink positioning reference signal and signal periodicity, or a defined comb structure.

5. The apparatus according to any of claims 1-4, wherein the sidelink positioning reference signal reconfiguration request message is transmitted to the network element, and wherein the apparatus further comprises:
means for receiving a sidelink positioning reference signal reconfiguration response message from the network element.

6. The apparatus according to claim 5, wherein the sidelink positioning reference signal reconfiguration response message comprises at least one of:
an instruction to maintain a current sidelink positioning reference signal configuration,
an instruction to activate or deactivate at least one sidelink positioning reference signal configuration,
a subset of sidelink positioning reference signal parameters to be modified,
the new sidelink positioning reference signal configuration,
a new uplink or downlink positioning method to be applied, or
a new set of anchor user equipment to be utilized for positioning the target user equipment.

7. The apparatus according to claim 5 or 6, wherein the sidelink positioning reference signal reconfiguration request message comprises:
at least one reason why the sidelink positioning reference signal reconfiguration request message is made.

8. The apparatus according to claim 7, wherein the at least one reason comprises:
the status information of the target user equipment,
a characteristic of a radio propagation channel between the apparatus and the target user equipment,
a current status of positioning performance of the apparatus,
a loading status of the apparatus,
a resource status of the apparatus,
a data traffic status of the apparatus,
a battery status of the apparatus, or
mobility characteristics of the apparatus.

9. The apparatus according to any of claims 5-8, wherein the sidelink positioning reference signal reconfiguration request message comprises:
a validity indication on whether the sidelink positioning reference signal reconfiguration request message is applicable for the target user equipment, for a subset of target user equipment, or for a plurality of global target user equipment.

10. The apparatus according to any of claims 1-9, further comprising:
means for determining reconfiguration of sidelink positioning reference signal resources based on an anchor user equipment suitability, or coupling of sidelink resources with one or more other target user equipment,
wherein coupling of sidelink resources with the one or more other target user equipment comprises adjusting sidelink positioning reference signal resources for the target user equipment and the one or more other target user equipment, and
wherein the anchor user equipment suitability is defined by one or more elements affecting positioning accuracy comprising a line-of-sight condition between the apparatus and the target user equipment, mobility conditions of the apparatus, energy availability of the apparatus, a confidence level of position of the apparatus, or scheduling and traffic patterns at the apparatus.

11. An apparatus (10, 20), comprising:
means for receiving a sidelink positioning reference signal reconfiguration request message from an anchor user equipment;
means for determining, based on at least one information indicated in the sidelink positioning reference signal reconfiguration request message, a new sidelink positioning reference signal configuration for the anchor user equipment, the new sidelink positioning reference signal configuration being used for reconfiguring transmission of the sidelink positioning reference signal, or maintaining a current sidelink positioning reference signal configuration; and
means for transmitting a sidelink positioning reference signal reconfiguration response message to the anchor user equipment comprising the new sidelink positioning reference signal configuration.

12. The apparatus according to claim 11, wherein the new sidelink positioning reference signal configuration comprises at least one of:
deactivation or suspension of a current sidelink positioning reference signal configuration,
a new uplink or downlink positioning method to be applied, or
a new anchor user equipment to be utilized for positioning a target user equipment.

13. The apparatus according to claims 11 or 12, wherein the sidelink positioning reference signal reconfiguration request message comprises at least one of:
at least one reason why the sidelink positioning reference signal reconfiguration request message is made,
a request for the new sidelink positioning reference signal configuration,
a request for a different positioning method,
a request for a different anchor user equipment, or
status information of the anchor user equipment, or sidelink conditions that are observed by a target user equipment or the anchor user equipment.

14. The apparatus according to any of claims 11-13, wherein the sidelink positioning reference signal reconfiguration response message comprises at least one of:
an instruction to maintain a current sidelink positioning reference signal configuration,
an instruction to activate or deactivate at least one sidelink positioning reference signal configuration,
a subset of sidelink positioning reference signal parameters to be modified,
the new sidelink positioning reference signal configuration,
a new uplink or downlink positioning method to be applied, or
a new set of anchor user equipment to be utilized for positioning a target user equipment.

15. A method, performed by a communication apparatus (10, 20), the method comprising:
transmitting (200) a sidelink positioning reference signal to a target user equipment, wherein the target user equipment corresponds to a user equipment to be positioned;
determining (205) a new sidelink positioning reference signal configuration, or transmitting a sidelink positioning reference signal reconfiguration request message to a network element triggering the network element to initiate determining of the new sidelink positioning reference signal configuration, the new sidelink positioning reference signal configuration being used for reconfiguring transmission of the sidelink positioning reference signal; and
transmitting (210), to the target user equipment, one or more new sidelink positioning reference signals according to the new sidelink positioning reference signal configuration.

16. A method, performed by a communication apparatus (10,20), the method comprising:
receiving (300) at a network element, a sidelink positioning reference signal reconfiguration request message from an anchor user equipment;
determining (305) by the network element, based on at least one information indicated in the sidelink positioning reference signal reconfiguration request message, a new sidelink positioning reference signal configuration for the anchor user equipment, the new sidelink positioning reference signal configuration being used for reconfiguring transmission of the sidelink positioning reference signal, or maintaining a current sidelink positioning reference signal configuration; and
transmitting (310) a sidelink positioning reference signal reconfiguration response message from the network element to the anchor user equipment comprising the new sidelink positioning reference signal configuration.

## Patentansprüche

1. Vorrichtung (10, 20), die Folgendes umfasst:
Mittel zum Übertragen eines Sidelinkortungsreferenzsignals zu einer Zielteilnehmereinrichtung, wobei die Zielteilnehmereinrichtung einer zu ortenden Teilnehmereinrichtung entspricht;
Mittel zum Bestimmen einer neuen Sidelinkortungsreferenzsignalauslegung oder Übertragen einer Sidelinkortungsreferenzsignalneuauslegungsanforderungsnachrich t zu einem Netzwerkelement, die auslöst, dass das Netzwerkelement das Bestimmen einer neuen Sidelinkortungsreferenzsignalauslegung initiiert, wobei die neue Sidelinkortungsreferenzsignalauslegung zur Neuauslegung einer Übertragung des Sidelinkortungsreferenzsignals verwendet wird; und
Mittel zum Übertragen von einem oder mehreren neuen Sidelinkortungsreferenzsignalen gemäß der neuen Sidelinkortungsreferenzsignalauslegung zur Zielteilnehmereinrichtung.

2. Vorrichtung nach Anspruch 1, die ferner Folgendes umfasst:
Mittel zum Empfangen eines Messberichts von der Zielteilnehmereinrichtung,
wobei der Messbericht Statusinformationen der Zielteilnehmereinrichtung umfasst, wobei die Statusinformationen mindestens eines von Folgendem umfassen:
einer Sidelinkmessung der Zielteilnehmereinrichtung,
einem aktuellen Status einer Ortungsleistung der Zielteilnehmereinrichtung,
einem Ladestatus der Zielteilnehmereinrichtung,
einem Ressourcenstatus der Zielteilnehmereinrichtung,
einem Datenverkehrsstatus der Zielteilnehmereinrichtung,
einem Batteriestatus der Zielteilnehmereinrichtung, oder
einer Mobilitätseigenschaft der Zielteilnehmereinrichtung.

3. Vorrichtung nach Anspruch 1 oder 2, die ferner Folgendes umfasst:
Mittel zum Informieren der Zielteilnehmereinrichtung über die neue Sidelinkortungsreferenzsignalauslegung.

4. Vorrichtung nach einem der Ansprüche 1 bis 3,
wobei die neue Sidelinkortungsreferenzsignalauslegung neu auszulegende Parameter umfasst, und
wobei die Parameter mindestens eines von Folgendem umfassen: Zeit- und Frequenzressourcen, Größe, Phase und Leistung des Sidelinkortungsreferenzsignals, einer Anzahl von Strahlen, einer definierten Signalbandbreite, einer definierten Dauer des Sidelinkortungsreferenzsignals und einer Signalperiodizität oder einer definierten Wabenstruktur.

5. Vorrichtung nach einem der Ansprüche 1 bis 4, wobei die Sidelinkortungsreferenzsignalneuauslegungsanforderungsnachrich t zum Netzwerkelement übertragen wird, und wobei die Vorrichtung ferner Folgendes umfasst:
Mittel zum Empfangen einer Sidelinkortungsreferenzsignalneuauslegungsantwortnachricht vom Netzwerkelement.

6. Vorrichtung nach Anspruch 5, wobei die Sidelinkortungsreferenzsignalneuauslegungsantwortnachricht mindestens eines von Folgendem umfasst:
eine Anweisung zum Beibehalten einer aktuellen Sidelinkortungsreferenzsignalauslegung,
eine Anweisung zum Aktivieren oder Deaktivieren von mindestens einer Sidelinkortungsreferenzsignalauslegung,
einen Untersatz von zu modifizierenden Sidelinkortungsreferenzsignalparametern,
die neue Sidelinkortungsreferenzsignalauslegung,
ein anzuwendendes neues Uplink- oder Downlinkortungsverfahren, oder
einen neuen Satz von Ankerteilnehmereinrichtungen, die zur Ortung der Zielteilnehmereinrichtung zu nutzen sind.

7. Vorrichtung nach Anspruch 5 oder 6, wobei die Sidelinkortungsreferenzsignalneuauslegungsanforderungsnachrich t Folgendes umfasst:
mindestens einen Grund dafür, weshalb die Sidelinkortungsreferenzsignalneuauslegungsanforderungsnachrich t erstellt wurde.

8. Vorrichtung nach Anspruch 7, wobei der mindestens eine Grund Folgendes umfasst:
die Statusinformationen der Zielteilnehmereinrichtung,
eine Eigenschaft eines Funkausbreitungskanals zwischen der Vorrichtung und der Zielteilnehmereinrichtung,
einem aktuellen Status einer Ortungsleistung der Vorrichtung,
einem Ladestatus der Vorrichtung,
einem Ressourcenstatus der Vorrichtung,
einem Datenverkehrsstatus der Vorrichtung,
einem Batteriestatus der Vorrichtung, oder
einer Mobilitätseigenschaft der Vorrichtung.

9. Vorrichtung nach einem der Ansprüche 5 bis 8, wobei die Sidelinkortungsreferenzsignalneuauslegungsanforderungsnachrich t Folgendes umfasst:
eine Gültigkeitsanzeige dazu, ob die Sidelinkortungsreferenzsignalneuauslegungsanforderungsnachrich t auf die Zielteilnehmereinrichtung, auf einen Untersatz von Zielteilnehmereinrichtungen oder auf eine Vielzahl von globalen Zielteilnehmereinrichtungen anwendbar ist.

10. Vorrichtung nach einem der Ansprüche 1 bis 9, die ferner Folgendes umfasst:
Mittel zum Bestimmen einer Neuauslegung von Sidelinkortungsreferenzsignalressourcen auf Basis einer Eignung einer Ankerteilnehmereinrichtung oder Koppeln von Sidelinkressourcen an eine oder mehrere Zielteilnehmereinrichtungen,
wobei das Koppeln von Sidelinkressourcen an eine oder mehrere andere Zielteilnehmereinrichtungen das Anpassen von Sidelinkortungsreferenzsignalressourcen für die Zielteilnehmereinrichtung und die eine oder die mehreren anderen Zielteilnehmereinrichtungen umfasst, und
wobei die Eignung der Ankerteilnehmereinrichtung durch ein oder mehrere Elemente definiert ist, die eine Ortungsgenauigkeit beeinträchtigen, die eine Sichtlinienbedingung zwischen der Vorrichtung und der Zielteilnehmereinrichtung, Mobilitätsbedingungen der Vorrichtung, eine Energieverfügbarkeit der Vorrichtung, ein Vertrauensniveau einer Position der Vorrichtung oder Planungs- und Verkehrsmuster an der Vorrichtung umfassen.

11. Vorrichtung (10; 20), die Folgendes umfasst:
Mittel zum Empfangen einer Sidelinkortungsreferenzsignalneuauslegungsanforderungsnachrich t von einer Ankerteilnehmereinrichtung;
Mittel zum Bestimmen einer neuen Sidelinkortungsreferenzsignalauslegung für die Ankerteilnehmereinrichtung auf Basis von mindestens einer Information, die in der Sidelinkortungsreferenzsignalneuauslegungsanforderungsnachrich t angezeigt ist, wobei die neue Sidelinkortungsreferenzsignalauslegung zur Neuauslegung einer Übertragung des Sidelinkortungsreferenzsignals verwendet wird, oder Beibehalten einer aktuellen Sidelinkortungsreferenzsignalauslegung; und
Mittel zum Übertragen einer Sidelinkortungsreferenzsignalneuauslegungsantwortnachricht zur Ankerteilnehmereinrichtung, die die neue Sidelinkortungsreferenzsignalauslegung umfasst.

12. Vorrichtung nach Anspruch 11, wobei die neue Sidelinkortungsreferenzsignalauslegung mindestens eines von Folgendem umfasst:
Deaktivierung oder Aussetzung einer aktuellen Sidelinkortungsreferenzsignalauslegung,
ein anzuwendendes neues Uplink- oder Downlinkortungsverfahren, oder
eine neue Ankerteilnehmereinrichtung, die zur Ortung einer Zielteilnehmereinrichtung zu nutzen ist.

13. Vorrichtung nach Anspruch 11 oder 12, wobei die Sidelinkortungsreferenzsignalneuauslegungsanforderungsnachrich t mindestens eines von Folgendem umfasst:
mindestens einen Grund dafür, weshalb die Sidelinkortungsreferenzsignalneuauslegungsanforderungsnachrich t erstellt wurde,
eine Anforderung der neuen Sidelinkortungsreferenzsignalauslegung,
eine Anforderung eines anderen Ortungsverfahrens,
eine Anforderung einer anderen Ankerteilnehmereinrichtung, oder
Statusinformationen der neuen Ankerteilnehmereinrichtung oder Sidelinkbedingungen, die von einer Zielteilnehmereinrichtung oder der Ankerteilnehmereinrichtung beobachtet werden.

14. Vorrichtung nach einem der Ansprüche 11 bis 13, wobei die Sidelinkortungsreferenzsignalneuauslegungsantwortnachricht mindestens eines von Folgendem umfasst:
eine Anweisung zum Beibehalten einer aktuellen Sidelinkortungsreferenzsignalauslegung,
eine Anweisung zum Aktivieren oder Deaktivieren von mindestens einer Sidelinkortungsreferenzsignalauslegung,
einen Untersatz von zu modifizierenden Sidelinkortungsreferenzsignalparametern,
die neue Sidelinkortungsreferenzsignalauslegung,
ein anzuwendendes neues Uplink- oder Downlinkortungsverfahren, oder
einen neuen Satz von Ankerteilnehmereinrichtungen, die zur Ortung einer Zielteilnehmereinrichtung zu nutzen sind.

15. Verfahren, das von einer Kommunikationsvorrichtung (10, 20) durchgeführt wird, wobei das Verfahren Folgendes umfasst:
Übertragen (200) eines Sidelinkortungsreferenzsignals zu einer Zielteilnehmereinrichtung,
wobei die Zielteilnehmereinrichtung einer zu ortenden Teilnehmereinrichtung entspricht;
Bestimmen (205) einer neuen Sidelinkortungsreferenzsignalauslegung, oder
Übertragen einer Sidelinkortungsreferenzsignalneuauslegungsanforderungsnachrich t zu einem Netzwerkelement, die auslöst, dass das Netzwerkelement das Bestimmen der neuen Sidelinkortungsreferenzsignalauslegung initiiert, wobei die neue Sidelinkortungsreferenzsignalauslegung zur Neuauslegung einer Übertragung des Sidelinkortungsreferenzsignals verwendet wird; und
Übertragen (210) von einem oder mehreren neuen Sidelinkortungsreferenzsignalen gemäß der neuen Sidelinkortungsreferenzsignalauslegung zur Zielteilnehmereinrichtung.

16. Verfahren, das von einer Kommunikationsvorrichtung (10, 20) durchgeführt wird, wobei das Verfahren Folgendes umfasst:
Empfangen (300) einer Sidelinkortungsreferenzsignalneuauslegungsantwortnachricht an einem Netzwerkelement von einer Ankerteilnehmereinrichtung;
Bestimmen (305) einer neuen Sidelinkortungsreferenzsignalauslegung für die Ankerteilnehmereinrichtung durch das Netzwerkelement auf Basis von mindestens einer Information, die in der Sidelinkortungsreferenzsignalneuauslegungsanforderungsnachrich t angezeigt ist, wobei die neue Sidelinkortungsreferenzsignalauslegung zur Neuauslegung einer Übertragung des Sidelinkortungsreferenzsignals verwendet wird, oder Beibehalten einer aktuellen Sidelinkortungsreferenzsignalauslegung; und
Übertragen (310) einer Sidelinkortungsreferenzsignalneuauslegungsantwortnachricht vom Netzwerkelement zur Ankerteilnehmereinrichtung, die die neue Sidelinkortungsreferenzsignalauslegung umfasst.

## Revendications

1. Appareil (10, 20), comprenant :
des moyens pour transmettre un signal de référence de positionnement de liaison latérale à un équipement utilisateur cible, dans lequel l'équipement utilisateur cible correspond à un équipement utilisateur à positionner ;
des moyens pour déterminer une nouvelle configuration de signal de référence de positionnement de liaison latérale, ou transmettre un message de demande de reconfiguration de signal de référence de positionnement de liaison latérale à un élément de réseau, déclenchant l'initiation par l'élément de réseau de la détermination d'une nouvelle configuration de signal de référence de positionnement de liaison latérale, la nouvelle configuration de signal de référence de positionnement de liaison latérale étant utilisée pour reconfigurer la transmission du signal de référence de positionnement de liaison latérale ; et
des moyens pour transmettre à l'équipement utilisateur cible un ou plusieurs nouveaux signaux de référence de positionnement de liaison latérale conformément à la nouvelle configuration de signal de référence de positionnement de liaison latérale.

2. Appareil selon la revendication 1, comprenant en outre :
des moyens pour recevoir un rapport de mesure de l'équipement utilisateur cible, dans lequel le rapport de mesure comprend des informations de statut de l'équipement utilisateur cible, les informations de statut comprenant au moins l'un des éléments suivants :
une mesure de liaison latérale de l'équipement utilisateur cible,
un statut actuel des performances de positionnement de l'équipement utilisateur cible,
un statut de charge de l'équipement utilisateur cible,
un statut de ressource de l'équipement utilisateur cible,
un statut de trafic de données de l'équipement utilisateur cible,
un statut de batterie de l'équipement utilisateur cible, ou
des caractéristiques de mobilité de l'équipement utilisateur cible.

3. Appareil selon les revendications 1 ou 2, comprenant en outre :
des moyens pour informer l'équipement utilisateur cible de la nouvelle configuration de signal de référence de positionnement de liaison latérale.

4. Appareil selon l'une des revendications 1 à 3,
dans lequel la nouvelle configuration de signal de référence de positionnement de liaison latérale comprend des paramètres à reconfigurer, et
dans lequel les paramètres comprennent au moins l'un des éléments suivants : ressources temporelles et fréquentielles, amplitude, phase et puissance du signal de référence de positionnement de liaison latérale, un nombre de faisceaux, une largeur de bande de signal définie, une durée définie du signal de référence de positionnement de liaison latérale et une périodicité de signal, ou une structure en peigne définie.

5. Appareil selon l'une des revendications 1 à 4, dans lequel le message de demande de reconfiguration de signal de référence de positionnement de liaison latérale est transmis à l'élément de réseau, et dans lequel l'appareil comprend en outre :
des moyens pour recevoir un message de réponse de reconfiguration de signal de référence de positionnement de liaison latérale de l'élément de réseau.

6. Appareil selon la revendication 5, dans lequel le message de réponse de reconfiguration de signal de référence de positionnement de liaison latérale comprend au moins l'un des éléments suivants :
une instruction pour maintenir une configuration de signal de référence de positionnement de liaison latérale actuelle,
une instruction pour activer ou désactiver au moins une configuration de signal de référence de positionnement de liaison latérale,
un sous-ensemble de paramètres de signal de référence de positionnement de liaison latérale à modifier,
la nouvelle configuration de signal de référence de positionnement de liaison latérale,
un nouveau procédé de positionnement de liaison montante ou de liaison descendante à appliquer, ou
un nouvel ensemble d'équipements utilisateurs d'ancrage à utiliser pour positionner l'équipement utilisateur cible.

7. Appareil selon la revendication 5 ou 6, dans lequel le message de demande de reconfiguration de signal de référence de positionnement de liaison latérale comprend :
au moins une raison pour laquelle le message de demande de reconfiguration de signal de référence de positionnement de liaison latérale est émis.

8. Appareil selon la revendication 7, dans lequel l'au moins une raison comprend :
les informations de statut de l'équipement utilisateur cible,
une caractéristique d'un canal de propagation radio entre l'appareil et l'équipement utilisateur cible,
un statut actuel des performances de positionnement de l'appareil,
un statut de charge de l'appareil,
un statut de ressource de l'appareil,
un statut de trafic de données de l'appareil,
un statut de batterie de l'appareil, ou
des caractéristiques de mobilité de l'appareil.

9. Appareil selon l'une des revendications 5 à 8, dans lequel le message de demande de reconfiguration de signal de référence de positionnement de liaison latérale comprend :
une indication de validité précisant si le message de demande de reconfiguration de signal de référence de positionnement de liaison latérale peut s'appliquer à l'équipement utilisateur cible, à un sous-ensemble d'équipements utilisateurs cibles, ou à une pluralité d'équipements utilisateurs cibles globaux.

10. Appareil selon l'une des revendications 1 à 9, comprenant en outre :
des moyens pour déterminer une reconfiguration de ressources de signal de référence de positionnement de liaison latérale sur la base d'une adéquation d'équipement utilisateur d'ancrage ou un couplage de ressources de liaison latérale avec un ou plusieurs autres équipements utilisateurs cibles,
dans lequel le couplage de ressources de liaison latérale avec les un ou plusieurs autres équipements utilisateurs cibles comprend l'ajustement de ressources de signal de référence de positionnement de liaison latérale pour l'équipement utilisateur cible et les un ou plusieurs autres équipements utilisateurs cibles, et
dans lequel l'adéquation d'équipement utilisateur d'ancrage est définie par un ou plusieurs éléments affectant la précision de positionnement comprenant une condition de ligne de visée entre l'appareil et l'équipement utilisateur cible, des conditions de mobilité de l'appareil, une disponibilité d'énergie de l'appareil, un niveau de confiance dans la position de l'appareil, ou des schémas de planification et de trafic au niveau de l'appareil.

11. Appareil (10, 20), comprenant :
des moyens pour recevoir un message de demande de reconfiguration de signal de référence de positionnement de liaison latérale d'un équipement utilisateur d'ancrage ;
des moyens pour déterminer, sur la base d'au moins une information indiquée dans le message de demande de reconfiguration de signal de référence de positionnement de liaison latérale, une nouvelle configuration de signal de référence de positionnement de liaison latérale pour l'équipement utilisateur d'ancrage, la nouvelle configuration de signal de référence de positionnement de liaison latérale étant utilisée pour reconfigurer la transmission du signal de référence de positionnement de liaison latérale, ou pour maintenir une configuration de signal de référence de positionnement de liaison latérale actuelle ; et
des moyens pour transmettre un message de réponse de reconfiguration de signal de référence de positionnement de liaison latérale à l'équipement utilisateur d'ancrage comprenant la nouvelle configuration de signal de référence de positionnement de liaison latérale.

12. Appareil selon la revendication 11, dans lequel la nouvelle configuration de signal de référence de positionnement de liaison latérale comprend au moins l'un des éléments suivants :
la désactivation ou la suspension d'une configuration de signal de référence de positionnement de liaison latérale actuelle,
un nouveau procédé de positionnement de liaison montante ou de liaison descendante à appliquer, ou
un nouvel équipement utilisateur d'ancrage à utiliser pour positionner un équipement utilisateur cible.

13. Appareil selon les revendications 11 ou 12, dans lequel le message de demande de reconfiguration de signal de référence de positionnement de liaison latérale comprend au moins l'un des éléments suivants :
au moins une raison pour laquelle le message de demande de reconfiguration de signal de référence de positionnement de liaison latérale est émis,
une demande de la nouvelle configuration de signal de référence de positionnement de liaison latérale,
une demande d'un procédé de positionnement différent,
une demande d'un équipement utilisateur d'ancrage différent, ou
des informations de statut de l'équipement utilisateur d'ancrage, ou des conditions de liaison latérale qui sont respectées par un équipement utilisateur cible ou l'équipement utilisateur d'ancrage.

14. Appareil selon l'une des revendications 11 à 13, dans lequel le message de réponse de reconfiguration de signal de référence de positionnement de liaison latérale comprend au moins l'un des éléments suivants :
une instruction pour maintenir une configuration de signal de référence de positionnement de liaison latérale actuelle,
une instruction pour activer ou désactiver au moins une configuration de signal de référence de positionnement de liaison latérale,
un sous-ensemble de paramètres de signal de référence de positionnement de liaison latérale à modifier,
la nouvelle configuration de signal de référence de positionnement de liaison latérale,
un nouveau procédé de positionnement de liaison montante ou de liaison descendante à appliquer, ou
un nouvel ensemble d'équipements utilisateurs d'ancrage à utiliser pour positionner un équipement utilisateur cible.

15. Procédé réalisé par un appareil de communication (10, 20), le procédé comprenant les étapes suivantes :
transmettre (200) un signal de référence de positionnement de liaison latérale à un équipement utilisateur cible, dans lequel l'équipement utilisateur cible correspond à un équipement utilisateur à positionner ;
déterminer (205) une nouvelle configuration de signal de référence de positionnement de liaison latérale, ou
transmettre un message de demande de reconfiguration de signal de référence de positionnement de liaison latérale à un élément de réseau, déclenchant l'initiation par l'élément de réseau de la détermination de la nouvelle configuration de signal de référence de positionnement de liaison latérale, la nouvelle configuration de signal de référence de positionnement de liaison latérale étant utilisée pour reconfigurer la transmission du signal de référence de positionnement de liaison latérale ; et
transmettre (210) à l'équipement utilisateur cible un ou plusieurs nouveaux signaux de référence de positionnement de liaison latérale conformément à la nouvelle configuration de signal de référence de positionnement de liaison latérale.

16. Procédé réalisé par un appareil de communication (10, 20), le procédé comprenant les étapes suivantes :
recevoir (300) au niveau d'un élément de réseau, un message de demande de reconfiguration de signal de référence de positionnement de liaison latérale d'un équipement utilisateur d'ancrage ;
déterminer (305) par l'élément de réseau, sur la base d'au moins une information indiquée dans le message de demande de reconfiguration de signal de référence de positionnement de liaison latérale, une nouvelle configuration de signal de référence de positionnement de liaison latérale pour l'équipement utilisateur d'ancrage, la nouvelle configuration de signal de référence de positionnement de liaison latérale étant utilisée pour reconfigurer la transmission du signal de référence de positionnement de liaison latérale, ou pour maintenir une configuration de signal de référence de positionnement de liaison latérale actuelle ; et
transmettre (310) un message de réponse de reconfiguration de signal de référence de positionnement de liaison latérale de l'élément de réseau à l'équipement utilisateur d'ancrage comprenant la nouvelle configuration de signal de référence de positionnement de liaison latérale.
